# EUROPÄISCHE PATENTANMELDUNG

(11) **EP 3 045 994 A1**
(43) Veröffentlichungstag der Anmeldung: **20.07.2016**
(21) Anmeldenummer: 15151111.0
(22) Anmeldetag: 14.01.2015
(51) Int. Cl.: G05B 19/418, H04L 12/801, H04L 12/70

(54) **Verfahren und Vorrichtung zur Steuerung des Datenkommunikationsflusses in einem industriellen Kommunikationsnetz unter Berücksichtigung des Echtzeit-Datenverkehrs**

(71) Anmelder: Siemens Aktiengesellschaft, 80333 München (DE)
(72) Erfinder: Kerschbaum, Sven, 90768 Fürth (DE); Talanis, Thomas, 91336 Heroldsbach (DE); Dinges, Clemens, 90587 Obermichelbach (DE)

(57) **Zusammenfassung**

Der erfindungsgemäße Gegenstand, also das erfindungsgemäße Verfahren und die erfindungsgemäße Vorrichtung übernehmen dabei die Funktion eines sogenannten Traffic Shaper.

Der Gegenstand reguliert den Datenverkehr flussabhängig unter besonderer Berücksichtigung des höherprioren Echtzeit-Datenverkehrs. Darin unterscheidet er sich maßgeblich von bisher bekannten Traffic Shaper, welche den Datenverkehr nur portabhängig betrachten.

Der vom Netzelement ausgehende Datenfluss in das Datennetz wird in einer Art und Weise gesteuert, dass die Datenrate und der maximale Burst für den Nachfolger festgelegt werden können.

## Beschreibung

In allen Lebensbereichen nimmt die Menge der gesammelten und übertragenen Informationen stetig immer schneller zu. Dies führt häufig dazu, dass die der Datenkommunikation zugrunde liegenden Kommunikationsnetze schnell ausgelastet sind und durch neue, schnellere und effizientere ausgetauscht werden müssen.

Auch in industriellen Anlagen hat sich dieser Trend bereits gezeigt. Es wird erwartet, dass die Menge der Informationen, welche in einer Anlage benötigt werden, ebenfalls weiter stark ansteigen wird. Mit dem Stichwort Industry 4.0 halten Konzepte wie Big Data, Cloud und ähnliches auch in diesem technischen Gebiet Einzug.

Dem gegenüber stehen die bereits bestehenden IndustrieAnlagen, mit den dort zugrunde liegenden Kommunikationsnetzen, welche teuer sind und daher als langfristige Investition gesehen auch nicht kurzfristig durch neue Netze ersetzbar sind. Die industriellen Kommunikationsnetze bestehen aus den Sensoren und Aktoren zur Auswertung und Überwachung der Aufgaben der Anlage - beispielsweise der Herstellung eines Produkts oder Ausführung einer automatisierten Tätigkeit.

Aus diesem Umfeld ergibt sich, dass es in der industriellen Kommunikation besondere Anforderungen bezüglich der Datenübertragung gibt. Zum einen muss die Übertragung zumindest mancher der Daten zu jedem Zeitpunkt zuverlässig und in einer bestimmten vorgegebenen Zeit, erfolgen, beispielsweise die Übertragung eines Messwerts vom Sensor oder eines Steuerungsbefehls an den Aktor. Man spricht hier auch von der sogenannten Echtzeit-Kommunikation.

Darüber hinaus nimmt einen Teil der Bandbreite des Kommunikationsnetzes inzwischen die Übertragung von weiteren Daten ein.

Es muss aber zu jedem Zeitpunkt sichergestellt sein, dass die höherpriore (Echtzeit-)Datenkommunikation zeitgetreu und ohne Datenverlust passiert.

Bislang wurde das oben genannte Problem oftmals dadurch gelöst, dass neu geplante Kommunikationsnetze völlig überdimensioniert geplant werden, beispielsweise durch Vorsehen von weiteren Netzelementen, die zum Zeitpunkt der Anlagen- und Netzplanung noch nicht notwendig gewesen wären. Dieses Vorgehen ist natürlich sehr teuer, und man riskiert, dass die zusätzlich verbauten Komponenten veraltet sind, bevor sie überhaupt benötigt werden.

Dabei wurde der zukünftige geplante Datenverkehr bestenfalls geschätzt, was natürlich nicht zu sicheren Ergebnissen führt.

Eine weitere Lösung war es, den hochprioren Datenverkehr vom niederprioren Datenverkehr zu trennen, also zwei separate Datennetze anzulegen. Auch diese Lösung ist sehr aufwändig und kostenintensiv, hat aber den Vorteil, dass der Echtzeit-Datenverkehr auf Basis der Engineering-Daten im Wesentlichen während der Planungsphase bereits bekannt und deswegen in der Regel leicht planbar ist.

Es ist daher Aufgabe der Erfindung, ein Verfahren und eine Vorrichtung anzugeben, die eine bessere Steuerung der Kommunikation in einem industriellen Kommunikationsnetz ermöglicht. Es ist insbesondere auch die Aufgabe der Erfindung, mit der Vorrichtung und dem Verfahren eine bessere Ausnutzung von bereits bestehenden Kommunikationsnetzen zu ermöglichen.

Diese Aufgabe wird gelöst durch die Gegenstände, welche durch die Merkmale der unabhängigen Ansprüche definiert sind.

Das erfindungsgemäße Verfahren ist geeignet und eingerichtet zur Steuerung von Datenkommunikation in einem Kommunikationsnetz einer industriellen Anlage, die aus Netzkomponenten zur Verwendung für eine erste Art von hochprioren Datenpaketen für Echtzeit-Kommunikation und eine zweite Art von zusätzlichen, niederprioren Datenpaketen für Nicht-Echtzeit-Kommunikation besteht, mittels zumindest eines Netzwerk-Shapers der geeignet und eingerichtet ist, einen Datenfluß in dem Kommunikationsnetz zu Steuern. Eine initiale Konfigurations-Information wird für den Netzwerk-Shaper ermittelt, basierend auf einer Netzwerkplanung für das industrielles Kommunikationsnetz, unter Verwendung von erster Information über das Kommunikationsverhalten der Echtzeit-Kommunikation, basierend auf Engineering-Daten der industriellen Anlage und unter Verwendung von zweiter Information über das Kommunikationsverhalten der nicht-Echtzeit-Kommunikation, basierend auf vorab ermittelten Daten über das Kommunikationsverhalten der einzelnen Netzkomponenten und wobei sichergestellt sein muss, dass die hochprioren Datenpakete zu jedem Zeitpunkt gemäß den Anforderungen der Echtzeit übertragen werden.

Die erfindungsgemäße Vorrichtung ist mit Merkmalen in zum Verfahren analoger Weise ausgestaltet.

Weitere Ausgestaltungen der Lösungen sind in den Unteransprüchen beschrieben.

Der erfindungsgemäße Gegenstand, also das erfindungsgemäße Verfahren und die erfindungsgemäße Vorrichtung übernehmen dabei die Funktion eines sogenannten Traffic Shapers.

Der Gegenstand reguliert den Datenverkehr flußabhängig unter besonderer Berücksichtigung des höherprioren Echtzeit-Datenverkehrs. Darin unterscheidet er sich maßgeblich von bisher bekannten Traffic Shapern, welche den Datenverkehr nur portabhängig betrachten.

Der vom Netzelement ausgehende Datenfluss in das Datennetz wird in einer Art und Weise gesteuert, dass die Datenrate und der maximale Burst für den Nachfolger festgelegt werden können.

Unter Traffic Shaping versteht man eine Art der Warteschlangenverwaltung bei paketvermittelten Datennetzen, bei dem nach bestimmten Kriterien die Datenpakete verzögert oder verworfen werden, um bestimmten Anforderungen zu genügen. Durchgeführt wird diese Funktion von einem sogenannten Netzwerk-Scheduler und ist grundsätzlich eine Form der Datenratenbegrenzung. Traffic-Shaping funktioniert immer unidirektional und arbeite im Gegensatz zu einer Datenflusskontrolle ohne Steuerinformationen der Gegenseite.

Mit Traffic Shaping wird der Netzwerkverkehr in verschiedene Bereiche eingeteilt, beispielsweise Applikationen und Protokolle.

Wie bereits angeführt sind die bislang bekannten Traffic Shaper für den Gebrauch in industriellen Anlagen nicht geeignet, aus mehreren Gründen:
Die bislang bekannten Implementierungen laufen auf herkömmlichen PCs, in der Regel mit Windows Betriebssystem. Die hier realisierbaren Quality of Service Vorgaben werden durch sogenannte "Group Policies" realisiert. Das bedeutet, dass Anwendungsbezogener Datentransfer unterstützt wird basierend auf einer durchschnittlichen Datenrate, die von der Anwendung in das Datennetz abgesendet werden darf. Basierend auf diesen technischen Voraussetzungen ist die Zeitbasis derzeit in sehr grobe Zeitslots eingeteilt (bis 15 ms), was zu hohen Datenbursts immer am Anfang eines Zeitslots führen kann.

Die außerdem bereits bekannten Traffic Policer werden üblicherweise in einer speziellen Art von Netzelementen, den sogenannten Bridges, realisiert. Traffic Policer werden verwendet um den Datenverkehr basierend auf einem Vertrag zu überwachen und darin festgelegten Konditionen, welche nichts mit den technischen Voraussetzungen und Gegebenheiten zu tun haben, einzuhalten. Diese sind nicht durchflussgesteuert basierend auf dem Hardware-Ressourcen, sondern Portbasiert. In diesem Fall kann durch einen einzelnen Port bereits die gesamte Bandbreite ausgenutzt werden, die eigentlich durch andere Ports "reserviert" war, und daher zu einer Ungleichbehandlung verschiedener Datenströme führen. Im Weiteren können diese Datenflüsse zu einem Flaschenhals (bottleneck) in der weiteren Datenverarbeitung führen wegen daraus resultierender Bursts.

Die für die Planung und Berechnung benötigten Informationen können für alle Echtzeit-Datenverkehre aus dem Engineering Projekt gewonnen werden, beispielsweise über STEP7 Classic oder das TIA Portal.

Die Steuerungsprogramme umfassen in der Regel neben der bereits beschriebenen Echtzeit-Kommunikation weitere Kommunikation (open user communication), beispielsweise das Senden weiterer Prozeßdaten an den Server zur Qualitätsüberwachung. Diese weiteren Datenströme werden in der Regel durch den Nutzer programmiert und gesteuert und daher ist die Datenauslastung und Charakteristik (Zeitpunkt und Menge der Kommunikation) ist dem Steuerungsprogramm vorab nicht bekannt.

Diese Informationen können dann aber ermittelt werden durch bereits aus der Compiler-Technologie bekannte Analyse-Techniken des Steuerungsprogramms, beispielsweise durch Aufbau eines Abstract Syntax Tree (AST) aus dem Steuerungsprogramm, Analyse des "toten" Codes (dead code analysis), Datenflußanalyse. Es können dann Testläufe mit "Best-Case" und "Worst-Case" Testfällen, insbesondere zur Auswertung des Zeitverhaltens.

In einer bevorzugen Ausgestaltung werden die vorgesehenen Netzelemente weiterhin mit Informationen über das Sendeverhalten, insbesondere bei Nicht-Echtzeit-Datentransfer, ausgestattet.
Vorgeschlagen wird hier in einer weiteren bevorzugten Ausgestaltungsform die Ausstattung der Geräte bereits durch den Hersteller mit sogenannten Typenschildern, auf denen die gewünschten Informationen leicht lesbar und einfach zugreifbar für jeden außen an den Geräten angebracht werden, bevorzugt auch in einer maschinenlesbaren Form, beispielsweise als QR- oder Strichcode.

Auch hier ist eine Ermittlung der Werte experimentell möglich, beispielsweise mittels einem Werkzeug namens "Wireshark" um die Datenbelastung zu messen.

Es ist vor allem eine Herausforderung, das Verhalten im "Worst Case" zu beachten. Hier kann der Erfindungsgemäße Gegenstand dafür sorgen, dass die so verwendeten Netzelemente nicht darüber hinaus mit Datentransfer belegt werden um des Echtzeit-Datentransfer nicht zu belasten.

Basierend auf dem zuvor bekannten Echtzeit-Datentransfer kann ein Netzplaner auch die durch das vorhandene Netz verfügbare Kapazität für Nicht-Echtzeit-Datentransfer berechnen.

Die Berechnung basiert auf dem "Network Calculus", das auf einer Min-Plus-Algebra basiert. Es ermöglicht die Berechnung von deterministischen Performanz-Grenzen in Kommunikationsnetzen. Auch Network Calculus ist eine Worst-Case Berechnung, das heisst, die berechneten Ergebnisse (Wartenschlangen Backlogs, Verzögerungen) sind immer eine obere Grenze für die im Netz tatsächlich auftretenden Backlogs und Verzögerungen.

Bislang hatten Nutzer üblicherweise keine detaillierten Kenntnisse über die verfügbaren Kapazitäten der Netzelemente bezüglich des Datenflows und der Datenmengen, der von Geräten und Applikationen ausgeht. Wenn jedoch eine Berechnung erfolgen soll, welche eine Durchflußsteuerung der Netzelemente in einer Anlage umsetzen soll, dann wird ein solches Wissen unabdingbar notwendig.

Andere Werkzeuge wie PROnetplan unterstützen den Nutzer nicht in diesem Prozess, d. h. der Nutzer muss alle Informationen über den versendeten Datentransfer selber kennen bzw. ermitteln. Wenn nun der Nutzer hier Annahmen trifft, die von der realen Situation im Netz und bei den Applikationen zu weit entfernt sind, wird auch die Berechnung basierend auf diesen Annahmen fehlerhaft sein.

Basierend auf vorab ermittelten Datencharakteristiken, wie oben bereits erläutert, es können Netzelemente zur Steuerung der Datenbelastung verwendet werden, welche basierend auf vorab bekannten Informationen zum Datenaustausch (Echtzeit und Nicht-Echtzeit) konfiguriert werden zur Datendurchflussbegrenzung.

Der erfindungsgemäße Gegenstand hilft dabei, die vorab beschriebenen Nachteile zu vermeiden, also beispielsweise die durch zu pessimistische Netzplanung unterdurchschnittliche Auslastung des Netzes im Vergleich zu dem, was möglich wäre, ohne den Echtzeit-Datenverkehr zu gefährden.

Dabei ist auch zu beachten, dass die nachträgliche Modellierung des Nicht-Echtzeit-Datenflusses üblicherweise keinerlei Einfluss hat auf die Nicht-Echtzeit-Applikationen oder Geräte.

Die berechnete verfügbare Bandbreite für nicht-Echtzeit-Datenverkehr umfasst Garantien für den kombinierten Datenfluss (Echtzeit und Nicht-Echtzeit). Diese Garantien sind immer gültig, da sie auf einer Worstcase-Berechnung des Netzes basieren und und umfassen beide Ende-zu-Ende Latenzen, genau so wie "reservierte" Bandbreite auf dem Pfad von der Quelle zur Senke, genauer für den "shaped" Nicht-Echtzeit Datenfluß Ende-zu-Ende Latenzen vom Traffic Shaper zum Empfänger Gerät.

Im Folgenden wird die Erfindung durch Figuren weiter erläutert. Dabei zeigt
Figur 1 ein schematisches Abbild von dem industriellen Netz während der Laufzeit (unten) sowie der erforderlichen Maßnahmen im Engineering (oben),
Figur 2 ein beispielhaftes Typenschild an einem Netzelement, und
Figur 3 ein Ablaufdiagramm für die Analyse eines zentralen Steuerprogramms.

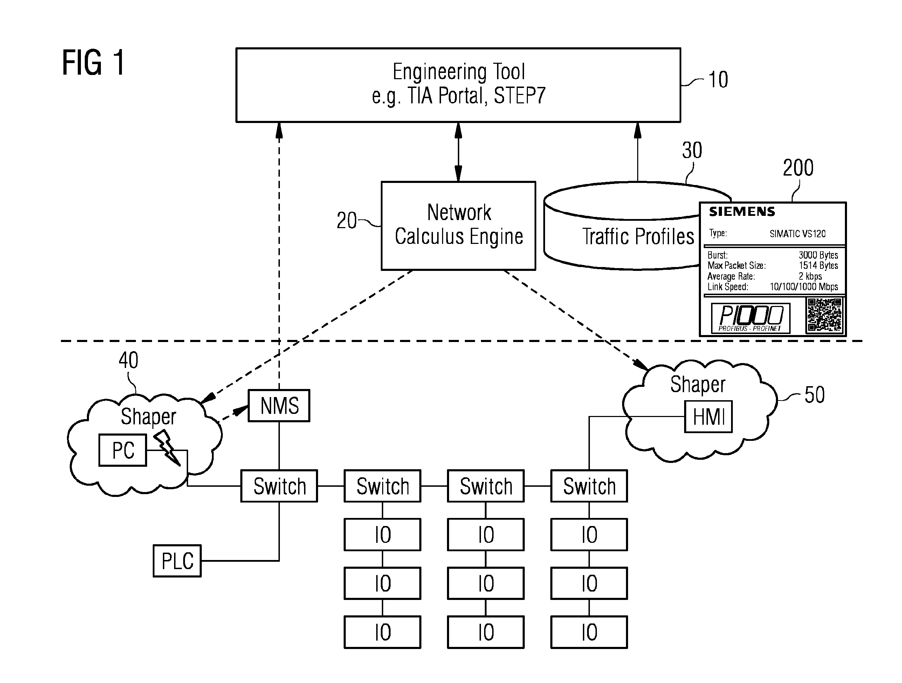

Eine Zusammenfassung des Workflow, welcher sowohl die Engineering-Phase als auch die Runtime-Phase mit einbezieht, ist in Figur 1 dargestellt.

In der unteren Hälfte der Figur (mit Runtime gekennzeichnet) ist eine schematische Darstellung eines industriellen Netzwerks zu finden. Bei den einzelnen Netzelementen handelt es sich entweder um Aktoren und Sensoren, welche mit einheitlich mit IO bezeichnet wurden, oder auch um zwischengeschaltete Netzelemente, die Switche. Spezielle Netzelemente, die Shaper, 40, 50, werden verwendet, um den Datenfluß im Netz zu steuern und sicher zu stellen, dass der Echtzeit-Datentransfer im Netz funktioniert. Weiterhin existiert im Netz die Anlagensteuerung PLC und ein Netzmanagement-System NMS, über welches auch ermittelte Informationen aus dem Runtime-Betrieb wieder zurück an das Engineering Tool gemeldet werden können.

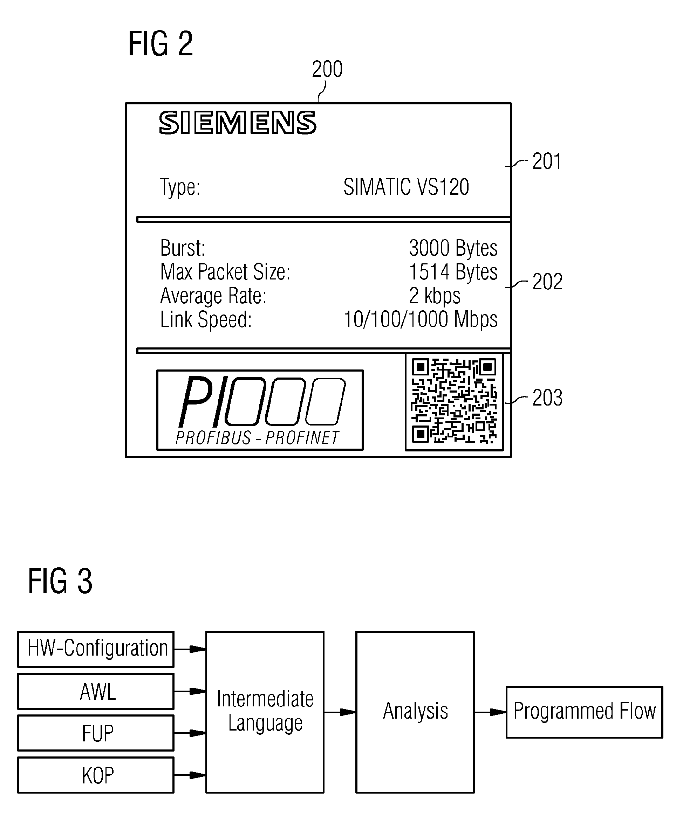

Die Shaper 40, 50 wiederum erhalten ihre initiale Konfigurierung als dem Engineering Tool. Mit Hilfe der Traffic Profiles, also der zu den Netzelementen mitgelieferten Informationen, hier beispielhaft dargestellt in Form eines Typenschilds, wie es in Figur 2 näher dargestellt wird, und weiteren Informationen über Topologie, Datenflüsse, Verzögerungen, Backlog usw. werden diese Konfigurierungsdaten erstellt, Network Calculus Engine.

Figur 2 zeigt ein beispielhaftes Typenschild, angebracht an einem Netzelement, welches Informationen über das Verhalten des jeweiligen Netzgerätes enthält, beispielsweise das Echtzeitverhalten des Netzelements, auf Durchfluß-Basis, im Gegensatz zu Portbasis.

Diese beispielhaften Typenschilder enthalten alle relevanten Informationen, die zur Simulation der Kapazität des Kommunikationsnetzes und Berechnung der fraglichen Initialisierungsdaten eines Shapers benötigt werden. Dabei handelt es sich beispielsweise um die maximale Paketgröße, den maximalen Burst, oder den Durchsatz.

Diese Informationen können vom Hersteller des einzelnen Netzelements bereits mitgeliefert werden, in einem Handbuch, im Gerät als Datei oder auch am Gerät angebracht. Die Informationen können vom Hersteller automatisiert gewonnen werden, beispielsweise durch automatisierte Testfälle, oder auch direkt in einer (Test-)Anlage.

Die Informationen bezüglich der relevanten Informationen (auf dem Typenschild oder vergleichbarem) werden insbesondere während der Engineering-Phase der Automatisierungsanlage bzw. des zugehörigen Netzwerks verwendet. Sie beschreiben sowohl den Echtzeit-Datentransfer als auch, und besonders, den Nicht-Echtzeit-Datenverkehr, der durch das Gerät bzw. die darüber laufenden Applikationen erfolgt.

Das hier vorgeschlagene Verfahren bzw. die vorgeschlagene Vorrichtung weist gegenüber dem Stand der Technik einige Vorteile auf. Insbesondere aufsetzend auf einem bereits bestehenden Kommunikationsnetz kann so die Ausnutzung der bestehenden Ressourcen während der Engineering-Phase optimiert werden. Die Anwendung bestehender Netzelemente kann so verändert werden, eine Neuanschaffung weiterer Hardware im besten Fall sogar vermieden werden.

Der Vorteil des Erfindungsgegenstandes liegt auch in einer zuverlässigeren und aussagekräftigen Diagnose, auch während der Laufzeit, beispielsweise der detaillierten Datenflusscharakteristiken. Durch den Traffic Shaper können dann auch umgekehrt fehlerhaft laufende Datenflüsse oder zuvor falsch ermittelte Geräte-Charakteristiken geprüft und gegebenenfalls zurück gemeldet werden, so dass im Fall zu großer Diskrepanzen auch eine neue Konfigurationsdatei erzeugt werden kann. So werden die Nutzungsausfallzeiten des Kommunikationsnetzes reduziert, insbesondere kein Einfluß auf den Echtzeit-Datenverkehr.

Darüber hinaus können die ermittelten Ergebnisse auch vorteilhaft dafür verwendet werden, anhand der geschätzten zukünftigen Bedarfs weitere geeignete neue Netzelemente (Geräte) für das Kommunikationsnetz zu ermitteln, welche auch für zukünftigen prognostizierten Bedarf, beispielsweise für bestimmte Szenarios, angepasst sind.

## Patentansprüche

1. Verfahren zur Steuerung von Datenkommunikation in einem Kommunikationsnetz einer industriellen Anlage, bestehend aus Netzkomponenten (IO, Switch) zur Verwendung für eine erste Art von hochprioren Datenpaketen für Echtzeit-Kommunikation und eine zweite Art von zusätzlichen, niederprioren Datenpaketen für Nicht-Echtzeit-Kommunikation
mittels zumindest eines Netzwerk-Shapers (40, 50) der geeignet und eingerichtet ist, einen Datenfluß in dem Kommunikationsnetz zu Steuern, wobei
eine initiale Konfigurations-Information für den Netzwerk-Shaper ermittelt wird basierend auf einer Netzwerkplanung für das industrielles Kommunikationsnetz,
unter Verwendung von erster Information über das Kommunikationsverhalten der Echtzeit-Kommunikation, basierend auf Engineering-Daten (10) der industriellen Anlage und
unter Verwendung von zweiter Information (30) über das Kommunikationsverhalten der nicht-Echtzeit-Kommunikation, basierend auf vorab ermittelten Daten über das Kommunikationsverhalten der einzelnen Netzkomponenten (IO, Switch) und
wobei sichergestellt sein muss, dass die hochprioren Datenpakete zu jedem Zeitpunkt gemäß den Anforderungen der Echtzeit übertragen werden.

2. Verfahren gemäß Patentanspruch 1,
**dadurch gekennzeichnet, dass**
die erste Information ermittelt wird durch Analyse der Engineering-Daten, insbesondere des zentralen SteuerungsProgramms der Anlage.

3. Verfahren gemäß Patentanspruch 2, zur Analyse des zentralen Steuerungsprogramms
mit folgenden Schritten
- Erstellen eines abstrakten Syntax-Baumes aus dem Steuerungsprogramm,
- Ermitteln von nicht verwendetem Code in dem Steuerungsprogramm,
- Datenflußanalyse,
- Ausführungsanalyse.

4. Verfahren gemäß Patentanspruch 3,
**dadurch gekennzeichnet, dass**
die Analyse des zentralen Steuerungsprogramms die Ausführung und Ermittlung im besten und im schlechtesten Ausführungsfall umfasst.

5. Verfahren gemäß einem der vorherigen Patentansprüche,
**dadurch gekennzeichnet, dass**
die Berechnung mit Network-Calculus durchgeführt wird.

6. Verfahren gemäß einem der vorherigen Patentansprüche,
**dadurch gekennzeichnet, dass**
die Informationen zum Kommunikationsverhalten der einzelnen Netzkomponenten (IO, Switch) initial vom Hersteller der Netzkomponente ermittelt und zur Verfügung gestellt wird, insbesondere in Form eines Typenschilds an der Netzkomponente.

7. Netzwerk-Shaper (40, 50), zur Steuerung von Datenkommunikation in einem Kommunikationsnetz einer industriellen Anlage, welches aus Netzkomponenten (IO, Switch) zur Verwendung für eine erste Art von hochprioren Datenpaketen für Echtzeit-Kommunikation und eine zweite Art von zusätzlichen, niederprioren Datenpaketen für Nicht-Echtzeit-Kommunikation besteht,
der geeignet und eingerichtet ist, einen Datenfluß in dem Kommunikationsnetz zu Steuern,
**dadurch gekennzeichnet, dass**
er mit einer initialen Konfigurations-Information versorgt ist, die ermittelt wird basierend auf einer Netzwerkplanung für das industrielles Kommunikationsnetz,
unter Verwendung von erster Information über das Kommunikationsverhalten der Echtzeit-Kommunikation, basierend auf Engineering-Daten (10) der industriellen Anlage und
unter Verwendung von zweiter Information (30) über das Kommunikationsverhalten der nicht-Echtzeit-Kommunikation, basierend auf vorab ermittelten Daten über das Kommunikationsverhalten der einzelnen Netzkomponenten (IO, Switch) und
wobei sichergestellt sein muss, dass die hochprioren Datenpakete zu jedem Zeitpunkt gemäß den Anforderungen der Echtzeit übertragen werden.

8. Verfahren gemäß Patentanspruch 1,
**dadurch gekennzeichnet, dass**
die erste Information ermittelt wird durch Analyse der Engineering-Daten, insbesondere des zentralen SteuerungsProgramms der Anlage.

9. Verfahren gemäß Patentanspruch 2, zur Analyse des zentralen Steuerungsprogramms
mit folgenden Schritten
- Erstellen eines abstrakten Syntax-Baumes aus dem Steuerungsprogramm,
- Ermitteln von nicht verwendetem Code in dem Steuerungsprogramm,
- Datenflußanalyse,
- Ausführungsanalyse.

10. Verfahren gemäß Patentanspruch 3,
**dadurch gekennzeichnet, dass**
die Analyse des zentralen Steuerungsprogramms die Ausführung und Ermittlung im besten und im schlechtesten Ausführungsfall umfasst.

11. Verfahren gemäß einem der vorherigen Patentansprüche,
**dadurch gekennzeichnet, dass**
die Berechnung mit Network-Calculus durchgeführt wird.

12. Verfahren gemäß einem der vorherigen Patentansprüche,
**dadurch gekennzeichnet, dass**
die Informationen zum Kommunikationsverhalten der einzelnen Netzkomponenten (IO, Switch) initial vom Hersteller der Netzkomponente ermittelt und zur Verfügung gestellt wird, insbesondere in Form eines Typenschilds an der Netzkomponente.
